# EUROPEAN PATENT APPLICATION

(11) **EP 4 823 012 A1**
(43) Date of publication of application: **14.10.2026**
(21) Application number: 25168914.7
(22) Date of filing: 07.04.2025
(51) Int. Cl.: H04B 10/112, G01S 17/00, H04B 10/70

(54) **OPTICAL TERMINAL FOR LIDAR AND OPTICAL COMMUNICATION AND METHOD FOR OPERATING**

(71) Applicant: Airbus S.A.S., 31700 Blagnac (FR)
(72) Inventor: Comin, Alberto, Taufkirchen (DE)
(74) Representative: OTN Airbus SAS

(57) **Abstract**

The present invention provides an optical terminal (1) for lidar and optical communication, comprising a transmitter section (2), including a first transmitter unit (21) configured to emit a first communication signal (211) at a first wavelength, a second transmitter unit (22) configured to emit a first quantum signal (221) at a second wavelength; and a receiver section (3), including a first receiver unit (31) configured to receive a second communication signal (311) at a third wavelength, a second receiver unit (32) configured to receive a lidar signal (321) at the first wavelength, and a controller (4) configured to control an emission of the first transmitter unit (21) and the second transmitter unit (22), extract data from the received communication signal (311), and determine a time-of-flight of the lidar signal (321) based on the emission of the first communication signal (211). Further, the present invention provides a corresponding method for operating an optical terminal (1).

## Description

### TECHNICAL FIELD OF THE INVENTION

The invention relates to an optical terminal for lidar and optical communication, in particular a lidar, a classical communication link and a quantum communication link, and a method for operating an optical terminal.

### TECHNICAL BACKGROUND

Optical Communication terminals, Quantum Key Distribution, QKD, i.e. quantum communication, terminals and Lidar systems have been proposed in the past as separate and independent products. Merely, classical optical communication terminals and quantum communication terminals have been implemented in the same hardware.

A technical limitation of Lidars is the short range, which are typically a few kilometers or less. To overcome this limitation, Yu Hong et al. "Airborne single-photon LiDAR towards a small-sized and low-power payload," Optica 11, 612-618 (2024) proposed single photon lidars. However, these systems are still ad hoc and relatively bulky and expensive. Therefore, there is a need to improve the efficiency and simplicity of an implemented airborne optical terminal.

### SUMMARY OF THE INVENTION

According to the invention, this problem is solved in each case by the subject matters of the independent claims.

According to a first aspect of the invention, an optical terminal for lidar and optical communication is provided. The optical terminal comprises a transmitter section, including a first transmitter unit configured to emit a first communication signal at a first wavelength, a second transmitter unit configured to emit a first quantum signal at a second wavelength; and a receiver section, including a first receiver unit configured to receive a second communication signal at a third wavelength, a second receiver unit configured to receive a lidar signal at the first wavelength, and a controller configured to control an emission of the first transmitter unit and the second transmitter unit, extract data from the received communication signal, and determine a time-of-flight of the lidar signal based on the emission of the first communication signal.

According to a second aspect of the invention, a method for operating an optical terminal is provided. The method comprises emitting, by a first transmitter unit of the optical terminal, a first communication signal at a first wavelength towards a target, emitting, by a second transmitter unit of the optical terminal, a first quantum signal at a second wavelength towards the target, receiving, by a first receiver unit of the optical terminal, a second communication signal at a third wavelength, receiving, by a second receiver unit of the optical terminal, a lidar signal at the first wavelength, extracting, by a controller of the optical terminal, data from the received second communication signal, and determining, by the controller, a time-of-flight of the lidar signal based on the emission of the first communication signal.

A fundamental idea of the invention is to implement in the same optical terminal in addition to classical and quantum communication a lidar device. The combination of classical optical communication terminals and a lidar system as well as the combination of quantum communication terminals and lidars system implemented in the same hardware have not been proposed before. The proposed invention uses synergies that result for the implementation of the three different optical functions classical communication, quantum communication and lidar.

A fundamental concept for the implementation of the invention is to use the transmitted classical communication beam or classical communication signal as a transmitting part of the lidar system. The receiver section is thus not only configured to receive a corresponding return classical communication signal but also the at reflected part of the first communication signal as the lidar signal. The reflection typically occurs at a target, whereas the communication signal is directed by the optical terminal.

Since the corresponding return second communication signal is sent over a different third wavelength by a correspondent terminal, it is possible to separate the lidar signal, which is a part of the first communication signal having the first wavelength reflected at the target, e.g. by a wavelength-division demultiplexer or a dichroic mirror. The quantum signal is sent on a second wavelength, which typically differs from the first and third wavelength, in order to avoid any interferences.

For receiving the two signals with different wavelengths, two receiver units having corresponding detectors are provided to convert the received second communication signal and the lidar signal into corresponding electric signals that are analyzed by the controller. The receiver section may thus be configured to separate the second communication signal and the lidar signal. This can be performed e.g. by a wavelength-division de/multiplexer or dichroic beam splitter, in case of using different polarizations, by a polarization-division multiplexer or polarizing beam splitter. Spatial mode division may also be applied for this part.

A communication signal is understood as a light-based signal used in classical or traditional (non-quantum) optical communication systems to transmit information. It typically relies on modulating properties such as intensity, phase, frequency, or polarization of light-often in the form of laser or LED beams-propagating through optical fibers or free space. Unlike quantum optical communication, it follows classical physics principles and does not involve quantum entanglement or superposition.

A quantum signal is to be understood as a signal or beam of light that exhibits quantum mechanical properties, such as superposition, entanglement, or squeezing. Unlike classical optical beams, which follow classical wave theory, quantum signals consist of individual photons that can be manipulated for quantum communication, computing, and sensing. These signals are used in applications such as quantum key distribution (QKD), quantum teleportation, and quantum-enhanced imaging.

The lidar signal is understood as an optical signal or beam of pulses or modulated light that is reflected back to the optical terminal after interacting with objects such as a target in an environment. The returning lidar signal is detected by a detector of the second receiver unit, and its time-of-flight (ToF) is determined to derive the distance to the target. Since the controller is also configured to control the first transmitter unit, it is able to measure the ToF based on a predetermined characteristic of the lidar signal that has been used by the transmitted unit to modulate the first communication signal to retrieve a starting time at the first transmitter unit. This can be, for example, a characteristic pulse sequence or a characteristic amplitude, frequency or phase sequence, depending on the type of modulation used for the classical communication channel used by the first and second communication signals.

The determination can be implemented in a post-processing by correlating the transmitted signal with the back-scattered signal. The relative velocity of the target is determined by the receiver using a clock recovery functionality of the internal clock in the controller. Since classical optical communication terminals already have a phased-locked loop, PLL, circuit to recover and track the frequency phase of the incoming communication signal, the comparison of the frequencies of the carrier of the transmitted signal with the frequency of the backscattered lidar signal can determine the relative velocity of the object with respect to the target, in particular by simply applying the Doppler effect formulas e.g. in case of a flying aircraft.

It is further understood that in this disclosure, the definition of a first, second, third or fourth wavelength are meant to be optical wavelengths, which are mutually different, for example by at least a few nanometers.

The advantage of the invention is to have a unique device, which can be deployed on an airborne platform, and which can provide communication and sensing capabilities. In one embodiment, the device can provide quantum communications, classical communications and lidar. In a further embodiment, the proposed optical terminal is also able to provide bidirectional quantum communication terminal, as well as single photon lidar functionality, as will be described further below. Such optical communication is radio-frequency, RF, silent and cannot be detected by adversaries, making it suitable for military application. By the use of the three different functions lidar, classical and quantum communications in a single terminal, the cost of the terminal is reduced relative to at least two separate devices, which would include at least two single photon counters or single photon detectors.

Advantageous embodiments and further developments emerge from the description with reference to the figures.

According to some aspects according to the invention, the optical terminal further comprises a transceiver section comprising a multiplexer for combining the first communication signal and the first quantum signal and a first aperture arranged and configured to transmit the combined first communication signal and the first quantum signal. By this embodiment, the transmitting signals propagate through the same optics downstream the multiplexer so that optical components are reduced.

According to some aspects according to the invention, the first aperture is further arranged and configured to receive the second communication signal and the lidar signal. In this embodiment, the receiving signals also propagate through at least the first aperture, thus saving at least one aperture and related optics. In such embodiments, an optical circulator may be provided to separate the transmitted and received signals, as will be described below.

According to some aspects according to the invention, the multiplexer is configured to combine the first communication signal and first quantum signal. The combined signals propagate on the same optical path, thus optical components for a second optical path become redundant.

According to some aspects according to the invention, the transceiver section further comprises an optical circulator, which is arranged and configured to receive the first communication signal on a first channel, transmit the first communication signal and receive the lidar signal and the second communication signal on a second channel, and transmit the lidar signal and the second communication signal on a second channel on a third channel. The first channel may connect the optical circulator with the transmitting unit. The second channel may connect the optical circulator with the first aperture. The third channel may connect the optical circulator with the receiver section. In this way, the transmitted first communication signal and the received second communication signal and the lidar signal can be separated.

According to some aspects according to the invention, the optical circulator is arranged and configured to receive the first quantum signal on the first channel and transmit the first quantum signal on the second channel. Besides the communication signals, the optical circulator thus may be used as well to direct the first quantum signal from the transceiver unit towards the aperture.

According to some aspects according to the invention, the multiplexer is arranged upstream of the optical circulator in relation to the transmitted first communication signal and the first quantum signal. In this way, the combining of the first communication signal with the first quantum signal is made before the optical circulator, so that the optical circulator separates all transmitted signals from all received signals. In such arrangement, a further demultiplexer might be needed to separate the received second communication signal and the lidar signal.

According to some aspects according to the invention, the multiplexer is arranged downstream of the optical circulator in relation to the transmitted first communication signal and the first quantum signal. This might relax the conditions for the required spectral range of the optical circulator. In other words, this allows to space the second wavelength of the quantum signal further apart from the first and third wavelength using by the communication signals.

According to some aspects according to the invention, the transceiver section further comprises a steering unit and a telescope unit configured to direct the first communication signal and first quantum signal towards a target and receive the second communication signal and the lidar signal from the target. By this arrangement, all involved signals are sent through the same optics, thus avoiding additional optics, thereby reducing cost and complexity.

According to some aspects according to the invention, the second receiver unit is further configured to detect a second quantum signal at a fourth wavelength. The second receiver comprises a single photon detector for detecting the second quantum signal. As mentioned above, the optical terminal in this embodiment functions also as a bidirectional quantum communications terminal, as well as a single photon lidar device. It thus is directed to a further compactness of the terminal with increased functionality. The here realized lidar is based on single photons has an increased sensitivity, which is beneficial for detecting more distant targets, e.g. 10 km or further away.

According to some aspects according to the invention, the second receiver unit comprises a switch having a first state, in which the single photon detector is configured to detect the first wavelength, and a second state, in which the single photon detector is configured to detect the fourth wavelength. This represents a particularly compact and cost saving way to realize the second receiver unit.

According to some aspects according to the invention, a difference between the fourth wavelength and the first wavelength is less than 50 nm. Preferably, the difference between the fourth wavelength and the first wavelength is between 10 nm and 30 nm, e.g. about 20 nm. By such separation, the first wavelength and the fourth wavelength can be discriminated very clearly by a dichroic mirror or color filter, and the wavelengths are close enough to be detected by the same detector.

According to some aspects according to the invention, the single photon detector is configured as a single-photon avalanche diode. This type of detector is a highly efficient device to accurately detect the quantum signal and the lidar signal with a high timing resolution and low noise performance over a relatively large spectral range with the same efficiency.

According to some aspects according to the invention, the controller is configured to set a time gate to the second receiver unit for detecting the lidar signal. The time gate may be used with the lidar signal to discriminate against falsely reflected signals, which can be reflections caused by optics in the transceiver section.

The above embodiments and further developments can be combined with each other as desired, if useful. In particular, all features of the optical terminal for lidar and optical communication are transferable to the method for operating an optical terminal, and vice versa. Further possible embodiments, further developments and implementations of the invention also comprise combinations, not explicitly mentioned, of features of the invention described before or below with respect to the embodiments. In particular, the skilled person will thereby also add individual aspects as improvements or additions to the respective basic form of the present invention.

### BRIEF SUMMARY OF THE DRAWINGS

The present invention is explained more specifically below on the basis of the exemplary embodiments indicated in the schematic figures, in which:
- Fig. 1: shows a schematic illustration of an optical terminal for lidar and optical communication according to an embodiment of the invention;
- Fig. 2: shows a schematic illustration of an optical terminal for lidar and optical communication according to a further embodiment of the invention;
- Fig. 3: shows a schematic illustration of an optical terminal for lidar and optical communication according to a further embodiment of the invention;
- Fig. 4: shows a flow chart for a method for operating an optical terminal for lidar and optical communication, according to an embodiment of the invention.

In the figures of the drawing, elements, features and components which are identical, functionally identical and of identical action are denoted in each case by the same reference designations unless stated otherwise.

### DESCRIPTION OF EXEMPLARY EMBODIMENTS

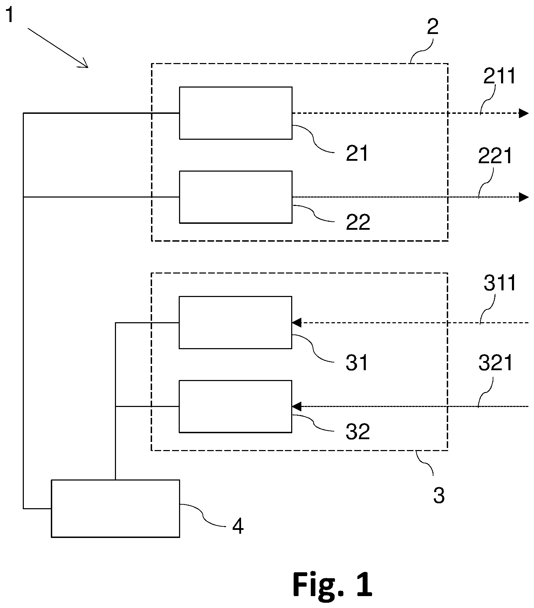

Fig. 1 shows a schematic illustration of an optical terminal 1 for lidar and optical communication according to an embodiment of the invention.

The optical terminal 1 for lidar and optical communication shown in Fig. 1 comprises a transmitter section 2. The transmitter section 2 includes a first transmitter unit 21 configured to emit a first communication signal 211 at a first wavelength and a second transmitter unit 22 configured to emit a first quantum signal 221 at a second wavelength. Both the first and second transmitter units 21, 22 thus contain a light source, such as a laser or LED device. As explained before, the first and second communication signals 211 and 311 are understood as a light-based signal used in classical optical communication systems to transmit information. Typical modulating properties are amplitude, phase, frequency, or polarization of light, e.g. formed in a laser or LED beam, which propagate through optical fibers or free space.

Furthermore, the optical terminal 1 comprises a receiver section 3. The receiver section 2 includes a first receiver unit 31 configured to receive a second communication signal 311 at a third wavelength, and a second receiver unit 32 configured to receive a lidar signal 321 at the first wavelength. As also explained before, the two receiver units 31, 32 have corresponding detectors and are provided to convert the received second communication signal 211 and the lidar signal 321 into corresponding electric signals.

The optical terminal 1 further comprises a controller 4 configured to control an emission of the first transmitter unit 21 and the second transmitter unit 22. The controller 4 is further configured to extract data from the received communication signal 311, which has been converted to an electric signal by the photodetector of the first receiver unit 31. The controller 4 is also configured to determine a time-of-flight of the lidar signal 321 based on the emission of the first communication signal 211. As already mentioned before as well, the lidar signal 321 is an optical signal of pulses or modulated light that is reflected back to the optical terminal 1 after interacting with objects such as a target in an environment. The returning lidar signal 321 is detected by the detector of the second receiver unit 32, and their time-of-flight (ToF) is determined to derive the distance to the target. Since the controller 4 is also configured to control the first transmitter unit 21, it is able to measure the ToF based on a predetermined characteristic of the lidar signal 321 that has been used by the transmitted unit to modulate the first communication signal 211 to retrieve a starting time at the first transmitter unit 21. This can be, for example, a characteristic pulse sequence or a characteristic amplitude, frequency or phase sequence, depending on the type of modulation used for the classical communication channel. The target is not shown in Fig. 1 and the following figures, but to be located further at the right hand side of Fig. 1.

The determination can be implemented in a post-processing in the controller 4 by correlating the transmitted signal with the back-scattered signal. The relative velocity of the target is determined by the receiver using a clock recovery functionality of the internal clock in the controller 4. Using a phased-locked loop, PLL, circuit, the comparison of the frequencies of the carrier of the transmitted signal 211 with the frequency of the backscattered lidar signal 321 can determine the relative velocity of the object with respect to the target, in particular by simply applying the Doppler effect formulas e.g. in case of a flying aircraft.

The controller 4 is further configured to set a time gate to the second receiver unit 32 for detecting the lidar signal 321. The time gate can be set to an expected time of arrival of the lidar signal 321, which reduces the amount of data processing. For example, reflections caused by the internal optics can be filtered away by the time gate.

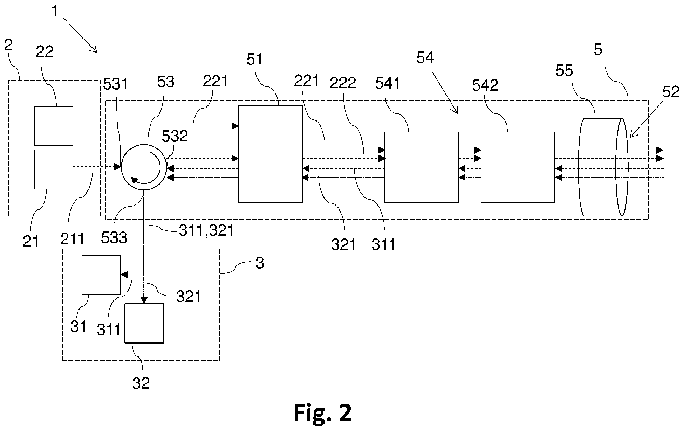

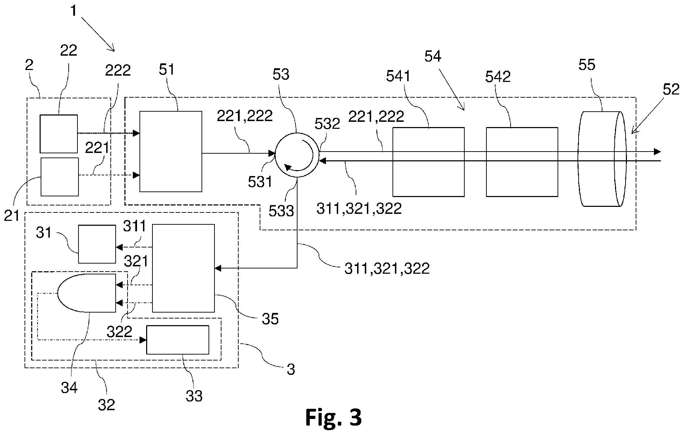

Fig. 2 shows a schematic illustration of an optical terminal 1 for lidar and optical communication according to a further embodiment of the invention. The optical terminal 1 shown in Fig. 2 is based on the optical terminal 1 of Fig. 1 but comprises some further features, as will be described in the following. For simplicity, the controller 4 is not shown in Fig. 3 but integrated in the optical terminal 1 similar as in the embodiment described by Fig. 1.

In this embodiment, the optical terminal 1 further comprises a transceiver 5 section. The transceier section 5 is used at least partly as a common optical path for the transmitted first communication signal 211, the first quantum beam 221 and the received communication signal 311 and lidar signal 321. The transceiver section 5 comprises an optical circulator 53, which is arranged and configured to receive the first communication signal 211 on a first channel 531, transmit the first communication signal 211 and receive the lidar signal 321 and the second communication signal 311 on a second channel 532, and transmit the lidar signal 321 and the second communication signal 311 on a second channel on a third channel 533. The first channel 531 is connected with the first transmitting unit 21. The third channel 533 is connected to the receiver section 3.

The transceiver section 5 comprises a multiplexer 51 for combining the first communication signal 211 and the first quantum signal 221 by spatially overlaying. The multiplexer 51 is arranged downstream the second channel 532, which connects the optical circulator 53 with the multiplexer 51,The multiplexer 51 is thus configured to combine the first communication signal 211 and first quantum signal 221. The multiplexer 51 is arranged downstream of the optical circulator 53 in relation to the transmitted first communication signal 211 and the first quantum signal 221.

Details of the signal or beam bombining are not shown and are known by the skilled person. In some embodiments, a fiber-based wavelength-division multiplexer or a dichoric mirror, which is transmissive at the first wavelength and reflective at the second walength is used to combine the first communication signal 211 and the first quantum signal 221. Similarly to the beam combining, it is understood that the received second communication signal 311 and the lidar signal 321 are separated in the receiver section 3, e.g. by a dichroic mirror, which is not shown in Fig. 2 for simplicity.

The transceiver section 5 further comprises a steering unit 54 and a telescope unit 55 configured to direct the first communication signal 211 and the first quantum signal 221 towards a target and receive the second communication signal 311 and the lidar signal 321 from the target. In this embodiment, the steering system 54 comprises a fine pointing unit 541 and a coarse pointing unit 542. The coarse pointing unit 542 typically covers a wide anglular range, such as a 360 degree azimuthal and polar angle, however, having a reduced pointing accurracy, and the fine pointing unit 541 typcially covers a much smaller angular range, e.g. only a few degrees, between 1 and 2 degree, or less than 1 degree, however, with a better pointing accurracy, e.g. in the order of arc seconds.

The transceiver section 6 further comprises a first aperture 52 arranged and configured to transmit the combined first communication signal 311 and the first quantum signal 221. In this embodiment, the first aperture 52 is further arranged and configured to receive the second communication signal 311 and the lidar signal 321. In some embodiments, the first aperature 52 is arranged and configured to transmit the first communication signal 211 and the first quantum signal 221 towards a target, and a second aperture is arranged and configured to receive the second communication signal 311 and the lidar signal 321.

In some embodiments, The transceiver section 6 further comprises adaptive optics for cleaning distortions of the incoming the second communication signal 311 and the lidar signal 321 and/or create a wavefront disortion of the transmitted first communication signal 211 and first quantum signal 221 such that these arrive with a clean wavefront at the target.

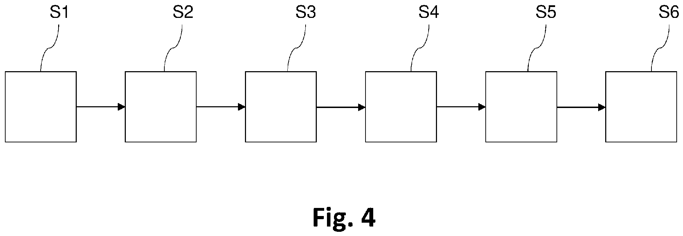

In the embodiment of the high-level schemativ Fig. 2, the optical circulator 53 and the multiplexer 51 are fiber-based components. Also the first and second transmitter units 21, 22 are fiber-coupled devices. The first and second receiver units 31, 32 may also apply fiber optics, e.g. by separating the incoming the second communication signal 311 and the lidar signal 321. However, the invention is not limited to such components and also covers these components built by free-space optics, as the skilled person knows. This also applies for the following embodiment shown in Fig. 3. For simplicity not shown in in Fig. 3 and 4, these embodiments employ fiber coupling between the fine-pointing unit 541 and the multiplexer 52.

Fig. 3 shows a schematic illustration of an optical terminal 1 for lidar and optical communication according to a further embodiment of the invention. The optical terminal 1 shown in Fig. 3 is based on the optical terminals 1 as described above with reference to Fig. 1 and 2. However, it comprises some further function, as will be described in the following.

In the embodiment of Fig. 3, the second receiver unit 32 is further configured to detect a second quantum signal 322 at a fourth wavelength. Foir this, the second receiver unit 32 comprises a single photon detector 33 for detecting the second quantum signal 322. In order to discriminate the second quantum signal 322 with from the second communication signal 311, a difference between the fourth wavelength and the first wavelength is less than 50 nm in some embodiments. In prefered embotiments, the difference between the fourth wavelength and the first wavelength is between 10 nm and 30 nm. This spectral distance is still small enough that the second quantum signal 322 experiences similar distortion by propagation from the target to the optical terminal 1. Such distortions can be reduced or eliminated by an adaptive optical system, as known in the art and therefore not shown here. In some embodiments, the single photon detector 33 is configured as a single-photon avalanche diode, which is a highly efficient device to accurately detect the quantum signal and the lidar signal with a high timing resolution and low noise performance over a relatively large spectral range with the same efficiency.

In this embodiment, the multiplexer 51 is arranged upstream of the optical circulator 53 in relation to the transmitted first communication signal 211 and the first quantum signal 221. The optical circulator 53 is arranged and configured to receive the first quantum signal 221 on the first channel 531 and transmit the first quantum signal 221 on the second channel 532. Therefore, the combined first communication signal 211 and the first quantum signal 221 is incident on the first channel 531 and transmitted by the thrid channel 533 of the optical circulator 53.

In addition, the receiving section 3 further comprises a demultiplexer 35 for separating the second communication signal 311 from the lidar signal 321 and the second quantum signal 322. The second communication signal 311 is directed onto the first receiver unit 31, and the lidar signal 321 and the second quantum signal 322 is directed to the second receiver unit 32. In this embodiment, the second receiver unit 32 comprises a switch 34 having a first state, in which the single photon detector 33 is configured to detect the first wavelength, and a second state, in which the single photon detector 33 is configured to detect the fourth wavelength.

For simplicity, the controller 4 is not shown in Fig. 3 but integrated in the optical terminal 1 similar as in the embodiment described by Fig. 1. Furthermore, combined signals 221, 222, 311, 321 and 322 are shown in Fig. 1 as one single arrow for simplicity.

Fig. 4 shows a flow chart for a method for operating an optical terminal 1 for lidar and optical communication according to an embodiment of the invention.

The method for operating an optical terminal 1 for lidar and optical communication shown in Fig. 1 is particularly suitable to operate an optical terminal 1 described above with reference to Fig. 1 to 3.

In a first step, a first communication signal 211 at a first wavelength is emitted S1 by a first transmitter unit 21 of the optical terminal 1 towards a target. Furthermore, a first quantum signal 221 at a second wavelength by a second transmitter unit 22 of the optical terminal 1 is emitted S2 towards the target.

In an additional step, a second communication signal 311 at a third wavelength is received S3 by a first receiver unit 31 of the optical terminal 1 from the target. Furthermore, a lidar signal 321 at the first wavelength is received S3 by a second receiver unit 32 of the optical terminal 1 from the target.

In a further step, data from the received second communication signal 311 are extracted S4 by a controller 4 of the optical terminal 1. In addition, a time-of-flight of the lidar signal 321 is determined S6 by the controller 4 based on the emission of the first communication signal 211.

It is understood that the order of the steps S1 to S6 are arbitrary and preferably are conducted at the same time. Since the lidar signal 321 is created through a reflection at the target, it is understood that the determination of the time-of-flight is based on some emission characteristic of the first communication signal 211, such as modulation or pulses, to retrieve a starting time at the first transmitter unit 21. In other word, that the detected lidar signal 321 is correlated with the first communication signal 211 for determining the time-of-flight.

In the detailed description above, various features have been combined in one or more examples in order to improve the rigorousness of the illustration. However, it should be clear in this case that the above description is of merely illustrative but in no way restrictive nature. It serves to cover all alternatives, modifications and equivalents of the various features and exemplary embodiments. Many other examples will be immediately and directly clear to a person skilled in the art on the basis of his knowledge in the art in consideration of the above description.

The exemplary embodiments have been chosen and described in order to be able to present the principles underlying the invention and their application possibilities in practice in the best possible way. As a result, those skilled in the art can optimally modify and utilize the invention and its various exemplary embodiments with regard to the intended purpose of use. In the claims and the description, the terms "including" and "having" are used as neutral linguistic concepts for the corresponding terms "comprising". Furthermore, use of the terms "a", "an" and "one" shall not in principle exclude the plurality of features and components described in this way.

While at least one exemplary embodiment of the present inventions is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiments. In addition, in this disclosure, the terms "comprise" or "comprising" do not exclude other elements or steps, the terms "a" or "one" do not exclude a plural number, and the term "or" means either or both. Furthermore, characteristics or steps, which have been described may also be used in combination with other characteristics or steps and in any order unless the disclosure or context suggests otherwise. This disclosure hereby incorporates by reference the complete disclosure of any patent or application from which it claims benefit or priority.

### LIST OF REFERENCE SIGNS

- 1: optical terminal
- 2: transmitter section
- 3: receiver section
- 4: controller
- 5: transceiver section
- 21: first transmitter unit
- 22: second transmitter unit
- 31: first receiver unit
- 32: second receiver unit
- 33: single photon detector
- 34: switch
- 35: demultiplexer
- 51: multiplexer
- 52: first aperture
- 53: optical circulator
- 54: steering unit
- 55: telescope unit
- 211: first communication signal
- 221: first quantum signal
- 311: second communication signal
- 321: lidar signal
- 322: second quantum signal
- 531: first channel
- 532: second channel
- 533: third channel
- 541: fine pointing unit
- 542: coarse pointing unit

## Claims

1. Optical terminal (1) for lidar and optical communication, comprising
a transmitter section (2), including
a first transmitter unit (21) configured to emit a first communication signal (211) at a first wavelength,
a second transmitter unit (22) configured to emit a first quantum signal (221) at a second wavelength; and
a receiver section (3), including
a first receiver unit (31) configured to receive a second communication signal (311) at a third wavelength,
a second receiver unit (32) configured to receive a lidar signal (321) at the first wavelength, and
a controller (4) configured to
control an emission of the first transmitter unit (21) and the second transmitter unit (22),
extract data from the received communication signal (311), and determine a time-of-flight of the lidar signal (321) based on the emission of the first communication signal (211).

2. Optical terminal (1) according to claim 1, further comprising a transceiver (5) section comprising a multiplexer (51) for combining the first communication signal (211) and the first quantum signal (221) and a first aperture (52) arranged and configured to transmit the combined first communication signal (311) and the first quantum signal (221).

3. Optical terminal (1) according to claim 2, wherein the first aperture (52) is further arranged and configured to receive the second communication signal (311) and the lidar signal (321).

4. Optical terminal (1) according to claim 2 or 3, wherein the multiplexer (51) is configured to combine the first communication signal (211) and first quantum signal (221).

5. Optical terminal (1) according to any of claims 2 to 4, wherein the transceiver section (5) further comprises an optical circulator (53), which is arranged and configured to receive the first communication signal (211) on a first channel (531), transmit the first communication signal (211) and receive the lidar signal (321) and the second communication signal (311) on a second channel (532), and transmit the lidar signal (321) and the second communication signal (311) on a second channel on a third channel (533).

6. Optical terminal (1) according to claim 5, wherein the optical circulator (53) is arranged and configured to receive the first quantum signal (221) on the first channel (531) and transmit the first quantum signal (221) on the second channel (532).

7. Optical terminal (1) according to claims 5 or 6, wherein the multiplexer (51) is arranged upstream of the optical circulator (53) in relation to the transmitted first communication signal (211) and the first quantum signal (221).

8. Optical terminal (1) according to claims 5 or 6, wherein the multiplexer (51) is arranged downstream of the optical circulator (53) in relation to the transmitted first communication signal (211) and the first quantum signal (221).

9. Optical terminal (1) according to any of claims 2 to 8, wherein the transceiver section (5) further comprises a steering unit (54) and a telescope unit (55) configured to direct the first communication signal (211) and first quantum signal (221) towards a target and receive the second communication signal (311) and the lidar signal (321) from the target.

10. Optical terminal (1) according to any of the preceding claims, wherein the second receiver unit (32) is further configured to detect a second quantum signal (322) at a fourth wavelength, wherein the second receiver unit (32) comprises a single photon detector (33) for detecting the second quantum signal (322).

11. Optical terminal (1) according to claim 10, wherein the second receiver unit (32) comprises a switch (34) having a first state, in which the single photon detector (33) is configured to detect the first wavelength, and a second state, in which the single photon detector (33) is configured to detect the fourth wavelength.

12. Optical terminal (1) according to claim 10 or 11, wherein a difference between the fourth wavelength and the first wavelength is less than 50 nm, preferably between 10 nm and 30 nm.

13. Optical terminal (1) according to any of claims 10 to 12, wherein the single photon detector (33) is configured as a single-photon avalanche diode.

14. Optical terminal (1) according to any of the preceding claims, wherein the controller (4) is configured to set a time gate to the second receiver unit (32) for detecting the lidar signal (321).

15. Method for operating an optical terminal (1), in particular the optical terminal (1) for lidar and optical communication according to the preceding claims, comprising
Emitting (S1), by a first transmitter unit (21) of the optical terminal (1), a first communication signal (211) at a first wavelength towards a target,
Emitting (S2), by a second transmitter unit (22) of the optical terminal (1), a first quantum signal (221) at a second wavelength towards the target,
Receiving (S3), by a first receiver unit (31) of the optical terminal (1), a second communication signal (311) at a third wavelength,
Receiving (S4), by a second receiver unit (32) of the optical terminal (1), a lidar signal (321) at the first wavelength,
Extracting (S5), by a controller (4), data from the received second communication signal (311), and
Determining (S6), by the controller (4), a time-of-flight of the lidar signal (321) based on the emission of the first communication signal (211).
